# EUROPÄISCHE PATENTSCHRIFT

(11) **EP 1 265 819 B1**
(45) Veröffentlichungstag und Bekanntmachung des Hinweises auf die Patenterteilung: **03.09.2003**
(21) Anmeldenummer: 01907557.1
(22) Anmeldetag: 23.02.2001
(51) Int. Cl.: C02F 3/12, B01D 61/00, B01D 63/00

(54) **VERFAHREN UND VORRICHTUNG ZUR ABWASSERREINIGUNG**
METHOD AND DEVICE FOR EFFLUENT TREATMENT
PROCEDE ET DISPOSITIF POUR L'EPURATION D'EAUX USEES

(30) Priorität: 10.03.2000 AT 4052000
(43) Veröffentlichungstag der Anmeldung: 18.12.2002
(73) Patentinhaber: VA TECH WABAG GmbH, 1211 Wien (AT)
(72) Erfinder: LAHNSTEINER, Josef, A-1180 Wien (AT); POURESMAEIL, Babak, A-1040 Wien (AT)
(74) Vertreter: VA TECH Patente GmbH & Co
(86) Internationale Anmeldenummer: EP0102078
(87) Internationale Veröffentlichungsnummer: WO01068536

(56) Entgegenhaltungen:
- DE-C- 19 718 028
- US-A- 5 230 803
- US-A- 5 518 620
- US-A- 5 997 743
- "ABWASSERREINIGUNG NACH KOMBIVERFAHREN" BETRIEBSTECHNIK AKTUELL,DE,VOGEL VERLAG GMBH, WURZBURG, Bd. 39, Nr. 11, 4. November 1998 (1998-11-04), Seite 42 XP000792701 ISSN: 1434-8071

## Beschreibung

Die Erfindung betrifft ein Verfahren zur Abwasserreinigung, bei dem das zu reinigende Abwasser biologisch gereinigt und der Ablauf einer Dead-End-Membranfiltration unterzogen wird, bei welcher die zurückgehaltenen Feststoffe durch Rückspülen entfernt werden, sowie eine entsprechende Vorrichtung.

In Ländern mit geringen Wasser-Resourcen stellt Abwasser eine wichtige potentielle Brauchwasserquelle dar. Der Ersatz von Frischwasser durch gereinigtes Abwasser ermöglicht einerseits eine bessere Nutzung der vorhandenen Wasserreserven, andererseits bleiben damit die natürlichen Wasserquellen dem Einsatz im Trinkwasserbereich erhalten. Um die sichere Wiederverwendung von gereinigtem Abwasser, insbesondere von kommunalem Abwasser, zu gewährleisten, müssen jedoch einige prinzipielle Anforderungen erfüllt werden.

Eine Anforderung ist eine möglichst geringe Restbelastung mit organischen Schadstoffen. Dies erfolgt gemäß dem Stand der Technik auf technisch einfache Weise mit Hilfe eines Festbetts, wie etwa mit Tropfkörperstufen, die aufgrund ihres einfachen Aufbaus besonders für technisch wenig entwickelte Gebiete der Erde geeignet sind. Die zweite noch bedeutendere Anforderung, die mit einem Festbett nicht befriedigend erfüllen werden kann, betrifft die hygienische Qualität des behandelten Abwassers, da Abwasser eine große Verbreitungsquelle für infektiöse Krankheiten darstellt.

Die Ablaufqualität eines Festbetts kann gemäß dem Stand der Technik zwar durch Einsatz von Sandfiltern verbessert werden, die Filtratqualität ist aber immer noch nicht ausreichend zu Wiederverwendung. Aus hygienischen Gründen muss auch zusätzlich eine große Menge Chlor dosiert werden, welche zur Bildung gefährlicher Chlor-organischer Substanzen (THM) beitragen kann.

Aus der US-A-5 230 803 ist ein Verfahren und eine Vorrichtung zur Abwasserreinigung bekannt, wobei das Abwasser zunächst in einem Festbett biologisch gereinigt und dann einer Dead-End Membranfiltration unterzogen wird.

Eine Aufgabe der vorliegenden Erfindung besteht nun darin, unter Vermeidung der genannten Nachteile Abwasser unter der Verwendung eines Festbetts derart zu reinigen, dass die Qualität des gereinigten Abwassers die Wiederverwendung als Brauchwasser - insbesondere für Beregnungszwecke - erlaubt.

Das erfindungsgemäße Verfahren zeichnet sich durch die Merkmale von Anspruch 1 aus. Die entsprechende Vorrichtung ist durch die Merkmale von Anspruch 4 gekennzeichnet.

Bei der Dead-End-Membranfiltration können sowohl Mikrofiltrationsmembranen als auch Ultrafiltrationsmembranen eingesetzt werden. Aufgrund dieser Betriebsweise und nachdem die Membranen Feststoffe zurückhalten, kommt es während Filtration zu einer Erhöhung der Feststoffkonzentration im Membranmodul bzw. in den Membranmodulen der Membranfiltrationsanlage. Diese Feststoffe werden, vorzugsweise periodisch, mittels vorgesehener Einrichtungen von der Membranoberfläche gespült und aus dem System entfernt.

Die Erfindung ist unabhängig von der Art der verwendeten Membranmodule (Rohr-, Kissen, Platten- sowie Hohlfasermodule) einsetzbar.

Weitere vorteilhafte Ausführungen der erfindungsgemäßen Vorrichtung sind in den abhängigen Ansprüchen angegeben.

Eine Membranfiltration nach einer biologischer Abwasserbehandlung bietet folgende Vorteile:
- entsprechend dem jeweiligen Porendurchmesser stellen Membranen eine absolute Barriere dar,
- suspendierte organische Feststoffe werden vollständig zurückgehalten und der Ablauf ist partikelfrei
- pathogene Keime werden sicher eliminiert und auch die Anzahl der Viruspartikel wird entscheidend verringert,
- der Ablauf der Anlage erfüllt bezüglich hygienischer Qualität die WHO-Anforderungen für uneingeschränkte Bewässerungszwecke.

Zudem hat die Filtration nach dem Dead-End-Prinzip den Vorteil, dass der Energieaufwand im Vergleich zu einer Membranfiltration im Cross-Flow-Betrieb gering ist und eine Dead-End-Membranfiltrationsanlage einen geringeren Platzbedarf hat als Nachklärbecken und Sandfilter, die üblicherweise nach einem Festbett, insbesondere einer Tropfkörperstufe, angeordnet sind.

Zusätzlich kann bei periodisch eingesetzten Rückspülungen das gereinigte Abwasser (Filtrat) verwendet werden, wodurch der Verbrauch an Frischwasser stark reduziert wird.

Um das Modul besser zu reinigen, wird die Rückspülung durch Gaseintrag, insbesondere Luft, unterstützt. Eine senkrechte Anordnung von Modulen bewirkt hierbei eine gleichmäßige und effektivere Verteilung und Durchmischung von Spülluft und Flüssigkeit.

Die stark mit Feststoff beladene Spülflüssigkeit wird zumindest teilweise einer dem Festbettreaktor vorgeschalteten Vorklärung zugeführt.

Alternativ oder für einen Teilstrom der Spülflüssigkeit kann vorgesehen werden, dass die bei der Rückspülung anfallende Spülflüssigkeit als Überschussschlamm abgezogen wird. Dadurch kann die Vorklärung des Festbetts entlastet werden.

Dadurch, dass dem Ablauf des Festbetts Flockungsmittel zugegeben werden, wird bewirkt, dass sich die Feststoffe zu größeren Flocken vereinigen und damit das Abwasser leichter filtriert und die Module der Membranfiltrationsanlage besser rückgespült werden können.

Die Reinigung der Membranen wird während der Rückspülung durch Dosierung von Reinigungsmitteln und/oder Desinfektionsmitteln zeitsparend und kosteneffektiv durchgeführt.

Wenn der Ablauf des Festbetts zur Feststoffabscheidung einer Nachklärstufe und anschließend der Dead-End-Membranfiitration zugeleitet wird, werden die Filtrationsleistung aufgrund der geringeren Feststoffkonzentration des Abwassers erhöht sowie die Rückspül- und Reinigungsintervalle verlängert. Eine bereits vorhandene Nachklärstufe kann dadurch in das erfindungsgemäße Verfahren einbezogen werden.

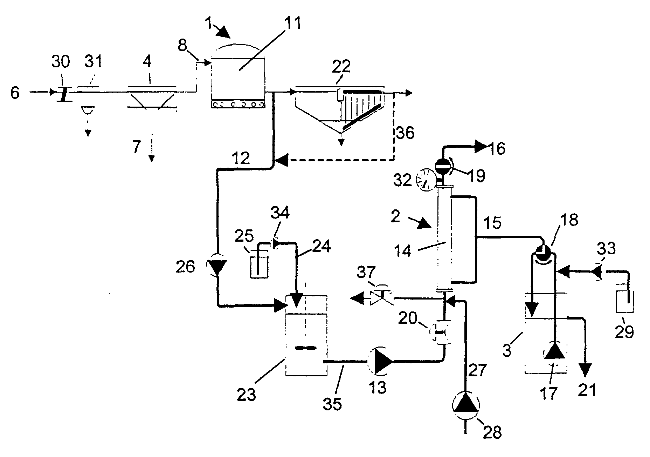

Die Erfindung wird anhand der Figur beispielhaft erläutert. In der Figur ist die Integration einer Membranfiltrationsanlage, im Folgenden kurz Filtrationsanlage, in einer Kläranlage dargestellt.

Mit der Filtrationsanlage 2 wird das biologisch gereinigte Abwasser behandelt. In dieser Kläranlage durchläuft das Rohabwasser 6 ein Rechenwerk 30, einen Sandfang 31 sowie ein als Emscherbrunnen ausgeführtes Vorklärbecken 4 mit Schlammabzug 7. Das vorabgesetzte Abwasser 8 wird dem Tropfkörperreaktor 1 mit der Filterschüttung 11 zugeführt. Der Ablauf 12 des Tropfkörperreaktors 1 wird in konstanter Menge aus einem Schacht (nicht dargestellt) unmittelbar nach dem Tropfkörperreaktor 1 und/oder direkt über eine Leitung 36 aus einem Nachklärbecken 22 über eine Tauchpumpe 26 entnommen. Der Ablauf 12 gelangt in das Flockungsbecken 23, in das Flockungsmittel aus einem Flokkungsmittelbehälter 25 mittels einer Dosierpumpe 34 dosiert wird. Aus diesem Flockungsbecken 23 wird die Filtrationsanlage 2 über eine Kreiselpumpe 13 angespeist.

Die Leitung für Feed 35 kann während des Rückspülens mittels Absperrhahn 20 abgesperrt werden.

Am oberen Ende des Filtermoduls 14 befindet sich ein Zwei-Weg-Ventil 19 (Spülwasserventil). Während der Filtration ist das Spülwasserventil 19 geschlossen, wodurch das sogenannte "dead end" gebildet wird. Nachdem die Membran des Filtermoduls 14 Feststoffe zurückhält, bildet sich eine zusätzliche Filterschicht aus angeschwemmten Feststoffen aus. Das Filtrat 15 dringt radial durch die Membran und fließt durch das Filtratventil 18 in den Filtratbehälter 3. Das Filtrat 15 fließt über einen nicht dargestellten Durchflussmesser und wird in einem Filtratbehälter 3 gesammelt. Das Filtrat kann über den Filtratablauf 21 abgezogen werden.

Während des Rückspülens wird über eine, sich im Filtratbehälter 3 befindende Rückspülpumpe 17, die beispielsweise als Tauchpumpe ausgeführt ist, Filtrat in umgekehrter Richtung in das Filtermodul 14 gedrückt. Ein Drei-Weg-Ventil (Filtratventil 18) schaltet zwischen den beiden Strömungen um. Das Spülwasserventil 19 wird während des Rückspülens zum Ableiten des Spülwassers 16 geöffnet. Die Menge des Spülwassers 16 kann mit dem Durchflussmesser 32 ermittelt werden.

Vor dem Rückspülen kann durch Ablassen der Flüssigkeit aus dem Filtermodul 14 beim anschließenden Rückspülen eines bessere Reinigungswirkung erzielt werden. Beim Ablassen werden der Absperrhahn 20 geschlossen sowie das Spülwasserventil 19 und der Absperrhahn 37 geöffnet.

Die erforderliche Rücklaufrate von 0,5 -1 beim Tropfkörperreaktor 1 kann, um einen hydraulischen Austrag der Biomasse zu gewährleisten, durch die Rückführung des Spülwassers 16 in das Vorklärbecken 4 erreicht werden.

Die anfänglichen Verblockungsprobleme der Module, die durch hohe Feststoffanteile des Abwassers verursacht wurden, konnten durch Modifikation des Rückspülens beseitigt werden.

Das modifizierte Rückspülen zeichnet sich durch eine kombinierte Spülung mit Luft und Wasser aus. Dabei werden feedseitig vor dem Rückspülen sowie während des Rückspülens große Luftmenge in das Modul eingeblasen. Dadurch wird der Feststoffkuchen aufgelockert und kann leichter abtransportiert werden. Dafür befindet sich vor dem Moduleingang ein Einlass für Spülluft 27. Durch diesen kann im Rückspülmodus zusätzlich zur Feedströmung mittels Kompressor 28 unterstützend Luft eingeblasen werden. Bei geeigneten Membranen kann Luft auch filtratseitig eingebracht werden.

Das Filtermodul 14 kann waagrecht, zur besseren Verteilung der Spülluft 27 jedoch auch senkrecht angeordnet werden. In der letztgenannten Anordnung wurden mit der modifizierten Rückspülung nach folgendem Modus selbst bei hoher Feststoffbelastung keine Verblockungen festgestellt:
- 20 - 30 min. Produktionszeit (Filtern)
- 20 sec.Vorwärtsspülung mit Feed
- 20 sec. Filtratrückspülung
- 20 sec. Filtratrückspülung und Vorwärtspülung mit Feed+Luftgemisch

Eine weitere Verbesserung des Rückspülens bewirkt der gleichzeitige Einsatz von Chemikalien. Dadurch kann zusätzlich das anorganische, organische und biologische Fouling der Membran stark reduziert werden.

Je nach Art und Intensität des Foulings können verschiede Chemikalien in verschiedenen Konzentrationen eingesetzt werden. Bei der Anlage gemäß der Figur hat sich eine saure Rückspülung mit anschließender Hypochloritspülung als sehr effektiv herausgestellt.

Bei der chemischen Rückspülung wird über eine Membranpumpe 33 chemisches Reinigungsmittel und/oder Desinfektionsmittel 29 in den Rückspülstrom dosiert. Die Dauer sowie das Intervall der chemischen Rückspülung sind einstellbar und hängen von verschmutzungsgrad des Abwassers und der Umgebungstemperatur ab.

Die beispielhaft beschriebene Anlage weist weiters folgende Merkmale auf: Der Ablauf aus dem Tropfkörperreaktor 1 enthält 80-100 mg.l⁻¹ abfiltrierbare Stoffe und weist ein CSB von 100-150 mg.l⁻¹ auf. Der Ablauf des Nachklärbeckens 22 weist 10 - 60 mg.l⁻¹ abfiltrierbare Stoffe und ein CSB von 55-90 mg.l⁻¹ auf. Die Flockungszeit beträgt 15-20 min. Als Dosierpumpe 34 für das Flockungsmittel wird eine Schlauchquetschpumpe verwendet.

Die Filtrationsanlage 2 besteht aus einem Filtermodul 14 mit einer Gesamt-Membranfläche von 5,1 m2. Das Membranmaterial ist PVDF (Polyvinylidenfluorid).

Aufgrund von Vorerkenntnissen aus Laborversuchen wird während der Produktion der Filtratstrom konstant gehalten. Der steigende Membranwiderstand wird durch Erhöhung des Feeddruckes kompensiert. Der mittlere Feeddruck beträgt dabei vorzugsweise 0,3 bis 0,6 bar, maximal jedoch 0,8 bar.

## Patentansprüche

1. Verfahren zur Abwasserreinigung, bei dem das zu reinigende Abwasser (6) biologisch gereinigt und der Ablauf (12) einer Dead-End-Membranfiltration (2) unterzogen wird, bei welcher die zurückgehaltenen Feststoffe durch Rückspülen entfernt werden, **dadurch gekennzeichnet,**
**dass** die biologische Reinigung in einer Tropfkörperstufe (1) erfolgt, wobei dem Ablauf (12) der Tropfkörperstufe (1) vor der Membranfiltration Flockungsmittel (24) zugegeben werden,
**dass** beim Rückspülen chemische Reinigungsmittel und/oder Desinfektionsmittel (29) zugegeben werden,
**dass** das Rückspülen durch Gaseintrag (27), insbesondere Luft, unterstützt wird und dass anfallende Spülflüssigkeit (16) einer der Tropfkörperstufs (1) vorgeschalteten Vorklärung (4) zugeführt wird.

2. Verfahren nach Anspruch 1, **dadurch gekennzeichnet, dass** das Rückspülen mit Filtrat (15) aus der Dead-End-Membranfiltration (2) erfolgt.

3. Verfahren nach einem der Ansprüche 1 oder 2, **dadurch gekennzeichnet, dass** beim Rückspülen anfallende Spülflüssigkeit (16) als Überschussschlamm abgezogen wird.

4. Vorrichtung zur Abwasserreinigung, umfassend einen Festbettreaktor (1) zur biologischen Reinigung, wobei nach dem Festbettieaktor (1) ablaufseitig eine Dead-End-Membranfiltrationsanlage (2) zur Reinigung des Ablaufs (12) des Festbettreaktors (1) vorgesehen ist, **dadurch gekennzeichnet,**
**dass** der Festbettreaktor (1) als Tropfkörperreaktor ausgebildet ist,
**dass** die Dead-End-Membranfiltrationsanlage (2) zum Ableiten der Spülflüssigkeit (16) mit einem Vorklärbecken (4) des Tropfkörperreaktors (1) verbunden ist,
**dass** ablaufseitig nach dem Tropfkörperreaktor (1) eine Einrichtung (25, 34) zur Zugabe von Flockungsmittel (24) zum Ablauf (12) vorgesehen ist,
**dass** eine Einrichtung (17, 18) zum Rückspülen der zurückgehaltenen Feststoffe vorgesehen ist, welche eine Einrichtung (33) zur Zugabe von chemischem Reinigungsmittel und/oder Desinfektionsmittel (29) aufweist und
**dass** zur Unterstützung des Rückspülens eine Einrichtung (28) zum Einbringen von Gas, insbesondere Luft (27), In die Dead-End-Membranfiltrationsanlage (2) vorgesehen ist

5. Vorrichtung nach Anspruch 4, **dadurch gekennzeichnet, dass** die Dead-End-Membranfiltrationsanlage (2) Mikro- oder Ultrafiltrationsmembranen aufweist.

6. Vorrichtung nach einem der Ansprüche 4 oder 5, **dadurch gekennzeichnet, dass** ein Filtratbehälter (3) zum Sammeln des Filtrates (15) der Dead-End-Membranfiltrationsanlage (2) vorgesehen ist, der mit der Einrichtung (17, 18) zum Rückspülen verbunden ist.

7. Vorrichtung nach einem der Ansprüche 4 bis 6, **dadurch gekennzeichnet, dass** die Dead-End-Membranfiltrationsanlage (2) senkrecht angeordnete Filtermodule (14) aufweist.

## Claims

1. Process for sewage purification, in which the sewage to be purified (6) is purified biologically and the outflow (12) is subjected to a dead end membrane filtration (2) in which the retained solids are removed by back-washing, **characterised in that**
the biological purification takes place in a trickling filter stage (1), wherein flocculants (24) are added to the outflow (12) of the trickling filter stage (1) upstream of the membrane filtration,
chemical cleaners and/or disinfectants (29) are added during the back-washing,
the back-washing is supported by the introduction of gas (27), in particular air, and scavenging liquid (16) obtained is fed to a preliminary clarification stage (4) connected upstream of the trickling filter stage (1).

2. Process according to claim 1, **characterised in that** the back-washing takes place with filtrate (15) out of the dead end membrane filtration (2).

3. Process according to one of claims 1 or 2, **characterised in that** scavenging liquid (16) obtained during the back-washing is drawn off as surplus sludge.

4. Apparatus for sewage purification, comprising a fixed bed reactor (1) for biological purification, in which downstream of the fixed bed reactor (1), on the outflow side, a dead end membrane filtration unit (2) for purifying the outflow (12) of the fixed bed reactor (1) is provided, **characterised in that**
the fixed bed reactor (1) is formed as a trickling filter reactor,
the dead end membrane filtration unit (2) is for the discharge of the scavenging liquid (16) connected to a preliminary clarification tank (4) of the trickling filter reactor (1),
on the outflow side, downstream of the trickling filter reactor (1), a device (25, 34) for adding flocculant (24) to the outflow (12) is provided,
a device (17, 18) for back-washing of the retained solids is provided, which comprises a device (33) for adding chemical cleaners and/or disinfectants (29), and to support the back-washing, a device (28) for introducing gas, in particular air (27), into the dead end membrane filtration unit (2) is provided.

5. Apparatus according to claim 4, **characterised in that** the dead end membrane filtration unit (2) comprises micro- and ultrafiltration membranes.

6. Apparatus according to one of claims 4 or 5, **characterised in that** a filtration tank (3) for collecting the filtrate (15) of the dead end membrane filtration unit (2) is provided, said filtration tank (3) being connected to the device (17, 18) for back-washing.

7. Apparatus according to one of claims 4 to 6,
**characterised in that** the dead end membrane filtration unit (2) comprises vertically arranged filter modules (14).

## Revendications

1. Procédé d'épuration des eaux usées, dans lequel les eaux usées (6) à nettoyer sont épurées biologiquement et l'évacuation (12) est soumise à une filtration sur membrane Dead-End (2), lors de laquelle les solides retenus sont éliminés par un rinçage à contre-courant, **caractérisé en ce que**,
l'épuration biologique s'effectue en un étage de lit percolateur bactérien (1), un agent floculant (24) étant ajouté à l'évacuation (12) de l'étage de lit percolateur bactérien (1), en amont de la filtration sur membrane,
**en ce que**, lors du rinçage à contre-courant des agents nettoyant chimiques et/ou des produits de désinfection (29) sont ajoutés,
**en ce que** le rinçage à contre-courant est assisté par introduction de gaz (27), en particulier d'air, et **en ce que** le liquide de rinçage (16) produit est amené à une pré-clarification (4), installée en amont de l'étage à lit percolateur bactérien (1).

2. Procédé selon la revendication 1, **caractérisé en ce que** le rinçage à contre-courant se fait avec le filtrat (15) issu de la filtration sur membrane Dead-End (2).

3. Procédé selon l'une des revendications 1 ou 2, **caractérisé en ce que** le liquide de rinçage (16) produit lors du rinçage à contre-courant est extrait sous forme d'excès de boue.

4. Dispositif d'épuration des eaux usées comprenant un réacteur à lit fixe (1) pour l'épuration biologique, où, après le réacteur à lit fixe (1), du côté aval, est prévue une installation de filtration sur membrane Dead-End (2) pour l'épuration de l'évacuation (12) du réacteur à lit fixe (1), **caractérisé en ce que** le réacteur à lit fixe (1) est réalisé sous la forme de réacteur à lit percolateur bactérien, et l'installation de filtration sur membrane Dead-End (2) est reliée, pour l'évacuation du liquide de rinçage (16), à un bassin de pré-clarification (4) appartenant au réacteur à lit percolateur bactérien (1),
**en ce que**, en aval après le réacteur à lit percolateur bactérien (1), est prévu un dispositif (25, 34) pour l'addition d'agents floculants (24) à l'évacuation (12),
**en ce qu'**un dispositif (17, 18), pour le rinçage à contre-courant des solides retenus, est prévu, qui présente un dispositif (33) pour l'addition de produits de nettoyage chimiques et/ou de produits de désinfection (29),
et **en ce que**, pour favoriser le rinçage à contre-courant, on a prévu un dispositif (23) pour l'introduction de gaz, en particulier de l'air (27), dans l'installation de filtration sur membrane Dead-End (2).

5. Dispositif selon la revendication 4, **caractérisé en ce que** l'installation de filtration sur membrane Dead-End (2) présente des membranes de micro- ou d'ultra-filtration.

6. Dispositif selon l'une des revendications 4 ou 5, **caractérisé en ce qu'**un récipient à filtrat (3), pour collecter le filtrat (15) de l'installation de filtration sur membrane Dead-End (2), est prévu, relié aux dispositifs (17, 18) pour le rinçage à contre-courant.

7. Dispositif selon l'une des revendications 4 à 6, **caractérisé en ce que** l'installation de filtration sur membrane Dead-End (2) présente des modules filtrants (14) disposés verticalement.
